# EUROPÄISCHE PATENTSCHRIFT

(11) **EP 1 853 143 B1**
(45) Veröffentlichungstag und Bekanntmachung des Hinweises auf die Patenterteilung: **21.04.2010**
(21) Anmeldenummer: 07704226.5
(22) Anmeldetag: 30.01.2007
(51) Int. Cl.: A47J 31/60

(54) **SIEBEINLAGE AM HEIZUNGSZULAUF IN PAD-KAFFEEMASCHINEN**
SCREEN INSERT AT THE HEATER INLET IN COFFEE POD MACHINES
INSTALLATION DE FILTRAGE A L'ENTREE DE CHAUFFAGE DANS DES MACHINES A CAFE A DOSETTES

(30) Priorität: 06.03.2006 DE 102006010178
(43) Veröffentlichungstag der Anmeldung: 14.11.2007
(73) Patentinhaber: BSH Bosch und Siemens Hausgeräte GmbH, 81739 München (DE)
(72) Erfinder: BEUTLROCK, Maximilian, 83361 Kienberg (DE); MAGG, Johann, 83368 St. Georgen (DE); STADLER, Stefan, 83376 Truchtlaching (DE)
(86) Internationale Anmeldenummer: PCT/EP2007/050873
(87) Internationale Veröffentlichungsnummer: WO 2007/101753

(56) Entgegenhaltungen:
- DE-A1- 3 041 234
- DE-A1-102004 004 821
- GB-A- 1 543 248

## Beschreibung

Die vorliegende Erfindung betrifft eine Pad-Kaffeemaschine, die einen Wassertank, eine Heizeinrichtung zum Aufheizen von Wasser, eine den Wassertank und die Heizeinrichtung miteinander verbindende Wasserleitung, und ein Überdruckventil umfasst.

Eine derartige Kaffeemaschine ist aus der DE 10 2004 004 821 A1 bekannt. Ferner ist aus der DE 30 41 234 A1 eine klassische Kaffeemaschine mit einem Überdruckventil, einer Heizeinrichtung und einem dazwischen liegenden Gitter bekannt. Allgemein bei Kaffeemaschinen wächst bei kalkhaltigem Wasser in der Heizeinrichtung eine Kalkschicht an. Durch einen Entkalkungsvorgang oder auch schon durch die schnelle Erhitzung und Abkühlung während eines Brühvorgangs werden Teile von dieser Kalkschicht abgelöst und können sich am tiefsten Punkt, beispielsweise im Rohrsystem vor der Heizeinrichtung ansammeln. Nachteil der gattungsgemäßen Kaffeemaschinen ist, dass beim Auslösen des Überdruckventils Kalkpartikel von der Heizeinrichtung bis in das Überdruckventil hinein gespült werden. Dabei können die Kalkstücke die Dichtflächen des Ventilsitzes beschädigen oder sich zwischen Ventilsitz und Ventilkörper ablagern und damit die Funktion des Ventils behindern, mit der Folge, dass das der Systemdruck nicht mehr erreicht und damit das Brühergebnis und die Systemstabilität negativ beeinflusst wird.

Aufgabe der vorliegenden Erfindung ist es, eine Kaffeemaschine anzugeben, bei der die oben genannten Nachteile vermieden werden.

Diese Aufgabe wird gelöst durch eine Kaffeemaschine gemäß den Merkmalen des ' Patentanspruchs 1. Sie umfasst ein Überdruckventil, das stromab des Wassertanks und stromauf der Wasserheizeinrichtung in oder an der Wasserleitung angeordnet ist. Die dafür angenommene Stromrichtung bezieht sich auf die Strömungsrichtung des Wassers im Normalbetrieb der Kaffeepadmaschine, also nicht auf die im Fall der Entstehung des Überdrucks. Außerdem ist im Unterschied zum Stand der Technik zwischen der Heizeinrichtung und dem Überdruckventil eine Einrichtung zum Zurückhalten von Partikeln aus der Heizeinrichtung angeordnet. Löst nun das Überdruckventil aufgrund eines Überdrucks im System aus, werden die Kalkpartikel zusammen mit einer Wasser- oder Wasserdampfströmung aus der Heizeinrichtung in Richtung Überdruckventil befördert. Die Kalkpartikel werden dabei von der Einrichtung zurückgehalten und können somit die Ventilfunktion nicht beeinträchtigen. Der Ventilkörper bleibt beweglich und kann immer wieder in seine ursprüngliche Lage zurückkehren. Die Dichtheit des Ventilsitzes ist somit auch nach dem Auslösen des Ventils sichergestellt. Ein gleich bleibend gutes Brühergebnis sowie eine hohe Systemstabilität bleiben über einen langen Zeitraum erhalten.

Zur Erzeugung und Aufrechterhaltung eines konstanten Druckniveaus sowie einer konstanten Fördermenge können zusätzlich Mittel zur Einstellung eines bestimmten Drucks oder einer bestimmten Strömungsgeschwindigkeit oder Durchflussmenge in der Wasserleitung angeordnet sein. Nach einer vorteilhaften Ausgestaltung der Erfindung ist in der Wasserleitung eine Pumpe angeordnet. Diese bietet den Vorteil, dass für unterschiedliche Kaffeesorten unterschiedliche Drücke bereitgestellt werden können. Außerdem ist es mit einer Pumpe möglich, eine bestimmte Durchflussmenge einzustellen und diese konstant zu halten. Dies ist insbesondere bei der Einstellung einer konstanten Tassenlänge von Bedeutung. Unter Tassenlänge wird erfindungsgemäß das Füllvolumen einer Tasse verstanden.

Nach einer weiteren vorteilhaften Ausgestaltung der Erfindung ist die Pumpe zwischen dem Wassertank und dem Überdruckventil angeordnet. Mit dieser Anordnung ist gewährleistet, dass das Überdruckventil auf der Druckseite der Pumpe angeordnet ist. Sowohl die Pumpe als auch das Überdruckventil befinden sich von der Heizeinrichtung aus gesehen hinter der Einrichtung. So ist neben dem Überdruckventil auch die Pumpe mit ihren beweglichen Teilen geschützt.

Die Einrichtung kann beispielsweise in Form eines Filters, Gitters oder eines Siebes ausgebildet sein, das eine Vielzahl von Öffnungen mit einer bestimmten Öffnungsweite aufweist. Die Öffnungsweite wird so gewählt, dass eine Partikelgröße, die einen negativen Einfluss auf die Ventil bzw. Pumpenfunktion hat, die Einrichtung nicht passieren kann.

Auch die zum Zurückhalten der Partikel zur Verfügung stehende Siebfläche der Einrichtung kann variiert werden. Bei einer weiteren vorteilhaften Ausgestaltung der Erfindung kann die Einrichtung gewölbt oder bezüglich der Strömungsrichtung des Wassers geneigt angeordnet sein. Damit kann die zum Zurückhalten der Partikel wirksame Fläche vergrößert werden. Das bietet den Vorteil, dass sich die Einrichtung auch bei einer hohen Partikelanzahl nicht zusetzt. Der Überdruck kann so immer sicher abgeleitet werden.

Außerdem kann die Form der Öffnungen so gewählt werden, dass sich die Partikel leicht wieder von der Einrichtung ablösen. Dazu kann beispielsweise der Öffnungsrand leicht konisch oder abgerundet geformt sein. Dadurch kontaktieren die Kalkpartikel die Einrichtung nur punktuell, so dass sie bei nachlassender Strömung nur noch lose anliegen und sich bei der entgegengesetzten Strömung wieder leicht von der Einrichtung trennen. Außerdem kann das Material der Einrichtung mit einer Beschichtung versehen sein, die das Anhaften der Partikel mindert oder verhindert. Die Funktion der Einrichtung kann so über eine längere Betriebsdauer sichergestellt werden.

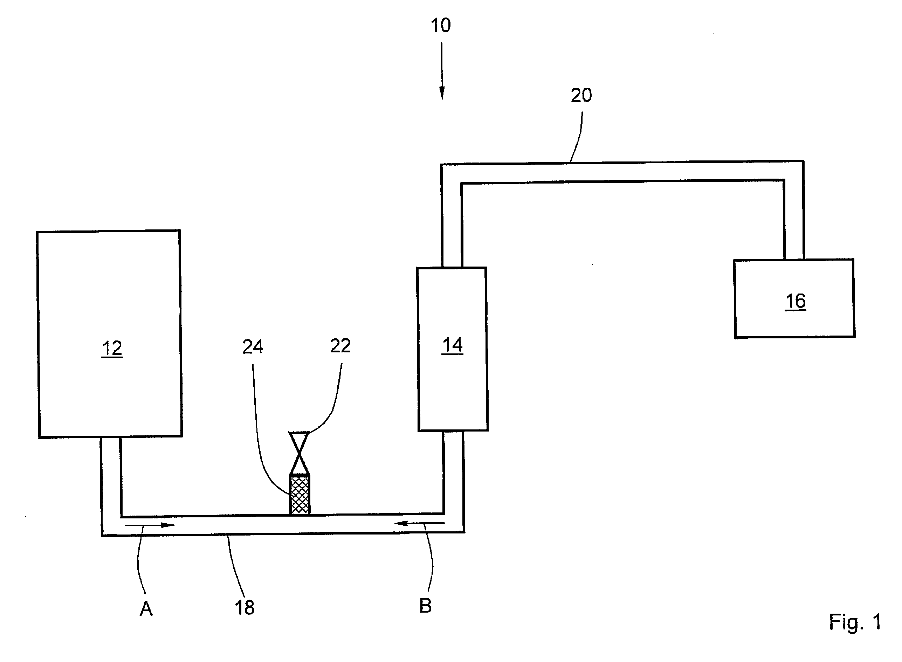

Nachfolgend werden drei Ausführungsbeispiele der Erfindung anhand der Figuren 1 bis 3 erläutert, die drei Ausführungsformen der Erfindung schematisch zeigen. Es zeigen:

Figur 1 zeigt eine Pad-Kaffeemaschine 10 mit einem Wassertank 12, einem Durchlauferhitzer 14 als Heizeinrichtung und einem Pad-Halter 16. Der Wassertank 12 und der Durchlauferhitzer 14 sind über eine Wasserleitung 18 und der Durchlauferhitzer 14 mit dem Pad-Halter 16 über eine Fluidleitung 20 verbunden. An der Wasserleitung 18 befindet sich ein Überdruckventil 22, vor dem eine Rückhaltevorrichtung für Partikel, Siebeinlage 24, angeordnet ist. Die Strömungsrichtung des Wassers im Brühbetrieb der Pad-Kaffeemaschine 10 bei normalem Druck ist mit einem Pfeil A symbolisiert. Kommt es im Bereich der Brühkammer, zum Beispiel in der Düse zu einer Verstopfung, kann der Druck zunächst nicht abgebaut werden. Das Überdruckventil 22 schafft dann gezielt Entlastung. Mit dem Pfeil B ist eine entsprechende rückläufige Strömung symbolisiert, wie sie beim Auslösen des Überdruckventils 22 auftritt.

Die in Figur 1 dargestellte Ausführungsform ermöglicht zum einen dem Wasser einen ungehinderten Durchfluss durch die Wasserleitung 18 vom Wassertank 12 zum Durchlauferhitzer 14. Die Siebeinlage 24 schützt das Überdruckventil 22 bei einer rückläufigen Strömung B vor Kalkpartikeln aus dem Durchlauferhitzer 14. Da in dieser Ausführungsform die Siebeinlage 24 nur in einer Richtung durchströmt wird, ist es wichtig, die Öffnungen der Siebeinlage 24 so zu gestalten, dass ein Anhaften von Kalkpartikeln an der Siebeinlage 24 und damit deren Zusetzen vermieden wird. Zu diesem Zweck sind die Öffnungen mit einem konischen Rand versehen, so dass sich die Kalkpartikel weniger gut in den Öffnungen der Siebeinlage 24 verhaken können. Außerdem kann die Oberfläche der Siebeinlage 24 mit einer Beschichtung versehen sein, die das Anhaften der Kalkpartikel zusätzlich hemmt.

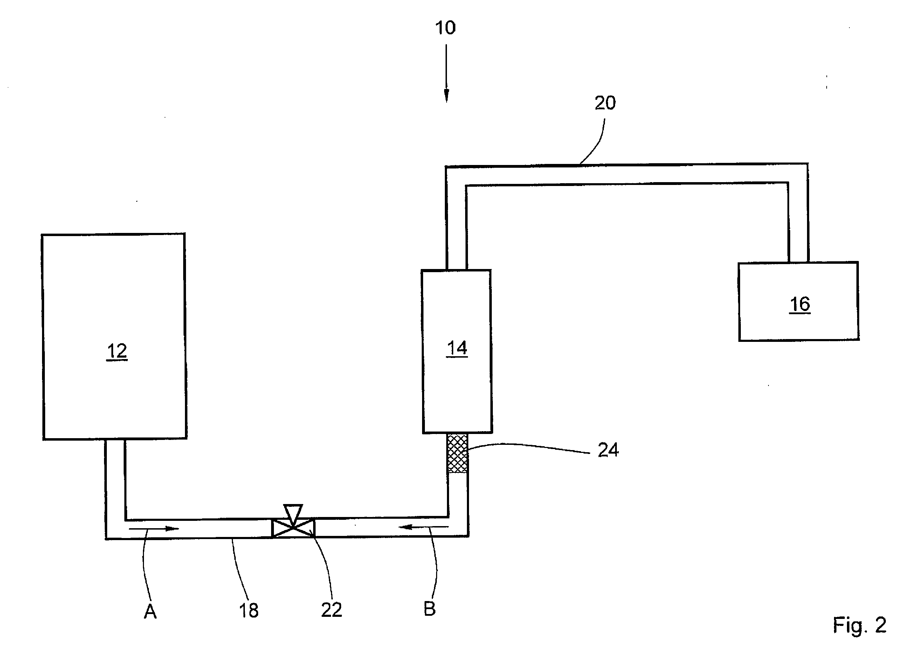

Figur 2 zeigt den bereits aus Figur 1 bekannten Aufbau der Pad-Kaffeemaschine 10, wobei das Überdruckventil 22 und die Siebeinlage 24 in der Wasserleitung 18 angeordnet sind, so dass das Wasser die Siebeinlage 24 sowohl in Richtung A als auch in Richtung B durchfließt. Da es sich bei Figur 2 lediglich um einen abgewandelten Aufbau des bereits aus Figur 1 bekannten Aufbaus der Pad-Kaffeemaschine 10 handelt, wurden gleiche Teile aus Gründen der besseren Verständlichkeit mit gleichen Bezugszeichen versehen. Diese Festlegung gilt auch für die nachfolgenden Figuren.

Im Unterschied zu Figur 1 befindet sich das Überdruckventil 22 an einer beliebigen Stelle in der Wasserleitung 18 und die Siebeinlage 24 vorzugsweise nahe dem Zulauf des Durchlauferhitzers 14. Die Anordnung der Siebeinlage im Bereich des Zulaufs des Durchlauferhitzers 14 verhindert bereits den Eintritt der Kalkpartikel in die Wasserleitung 18. Damit ist zusätzlich auch die Wasserleitung 18 vor dem Zusetzen mit Kalkpartikeln geschützt.

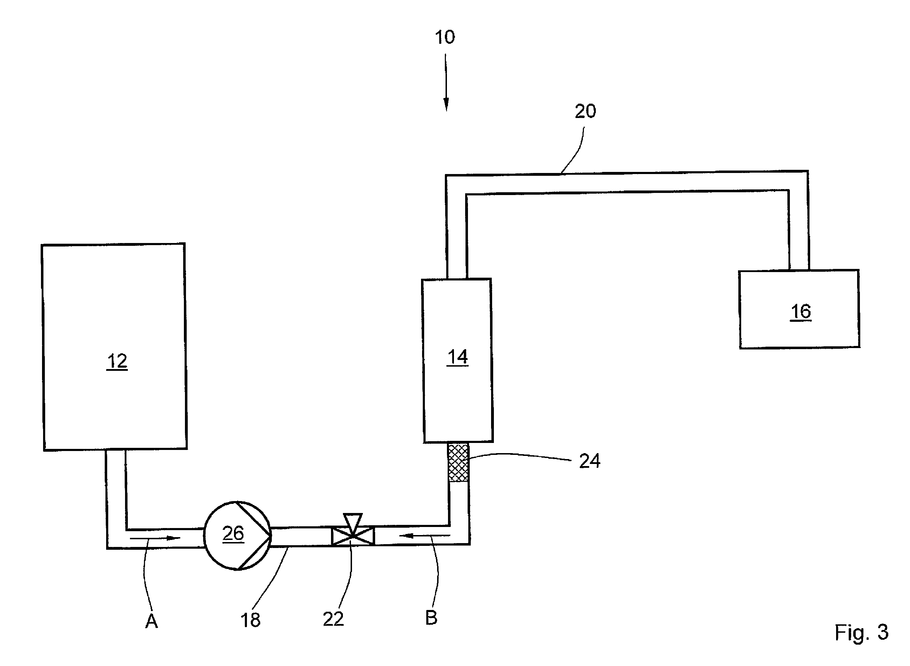

Figur 3 zeigt eine weitere Ausführungsform der erfindungsgemäßen Pad-Kaffeemaschine 10, bei der zusätzlich zur Siebeinlage 24 und dem Überdruckventil 22 eine Pumpe 26 in der Wasserleitung 18 angeordnet ist. Die Pumpe 26 befindet sich zwischen dem Wassertank 12 und dem Überdruckventil 22. Die nahe dem Zulauf des Durchlauferhitzers 14 angeordnete Siebeinlage 24 verhindert bei dieser Ausführungsform, dass aus dem Durchlauferhitzer 14 gelöste Kalkpartikel mit einer rückläufigen Strömung B in die Wasserleitung 18 gelangen können. Die Anordnung der Siebeinlage 24 schützt zusätzlich auch die Pumpe 26, insbesondere deren bewegliche Teile, vor Kalkpartikeln aus dem Durchlauferhitzer 14.

Da es sich bei den vorhergehenden, detailliert beschriebenen Pad-Kaffeemaschinen 10 um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen und Anordnungen des Überdruckventils 22 und der Siebeinlage 24 in anderer Form als der in der hier beschriebenen erfolgen. Ebenso kann die Anordnung oder die Ausgestaltung der Pumpe 26 in einer anderen Form erfolgen, wenn dies aus platz- oder designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 10 -: Pad-Kaffeemaschine
- 12 -: Wassertank
- 14 -: Heizeinrichtung, Durchlauferhitzer
- 16 -: Pad-Halter
- 18 -: Wasserleitung
- 20 -: Fluidleitung
- 22 -: Überdruckventil
- 24 -: Rückhaltevorrichtung, Siebeinlage
- 26 -: Pumpe

## Patentansprüche

1. Pad-Kaffeemaschine (10), mit einem Wassertank (12), einer Heizeinrichtung (14) zum Aufheizen von Wasser, einer den Wassertank (12) und die Heizeinrichtung (14) miteinander verbindenden Wasserleitung (18), und mit einem Überdruckventil (22), **dadurch gekennzeichnet, dass** das Überdruckventil (22) stromab des Wassertanks (12) und stromauf der Heizeinrichtung (14) angeordnet ist, und dass zwischen der Heizeinrichtung (14) und dem Überdruckventil (22) eine Einrichtung (24) zum Zurückhalten von Partikeln aus der Heizeinrichtung (14) angeordnet ist.

2. Pad-Kaffeemaschine (10) nach Anspruch 1, **dadurch gekennzeichnet, dass** in der Wasserleitung (18) eine Pumpe (26) angeordnet ist.

3. Pad-Kaffeemaschine (10) nach Anspruch 1 oder 2, **dadurch gekennzeichnet, dass** die Pumpe (26) zwischen dem Wassertank (12) und dem Überdruckventil (22) angeordnet ist.

4. Pad-Kaffeemaschine (10) nach einem der vorhergehenden Ansprüche, **dadurch gekennzeichnet, dass** die Einrichtung (24) gewölbt oder bezüglich der Strömungsrichtung des Wassers geneigt angeordnet ist.

5. Pad-Kaffeemaschine (10) nach einem der vorhergehenden Ansprüche, **dadurch gekennzeichnet, dass** die Einrichtung (24) auf ihrer stromabgewandten Seite Öffnungen aufweist, deren Ränder konisch oder abgerundet ausgebildet sind.

## Claims

1. Pod coffee machine (10), with a water tank (12), a heating device (14) for heating water, a water duct (18) connecting the water tank (12) and the heating device (14) together, and a pressure relief valve (22), **characterised in that** the pressure relief valve (22) is arranged downstream of the water tank (12) and upstream of the heating device (14) and that a device for holding back particles from the heating device (14) is arranged between the heating device (14) and the pressure relief valve (22).

2. Pod coffee machine (10) according to claim 1, **characterised in that** a pump (26) is arranged in the water duct (18).

3. Pod coffee machine (10) according to claim 1 or 2, **characterised in that** the pump (26) is arranged between the water tank (12) and the pressure relief valve (22).

4. Pod coffee machine (10) according to any one of the preceding claims, **characterised in that** the device (24) is curved or arranged at an inclination with respect to the flow direction of the water.

5. Pod coffee machine (10) according to any one of the preceding claims, **characterised in that** the device (24) on its side remote from the flow has openings of which the edges are formed to be conical or rounded.

## Revendications

1. Machine à café à dosettes (10), avec un réservoir d'eau (12), un dispositif de chauffage (14) pour chauffer l'eau, une conduite d'eau (18) reliant le réservoir d'eau (12) et le dispositif de chauffage (14) l'un à l'autre, et avec une soupape de surpression (22), **caractérisée en ce que** la soupape de surpression (22) est disposée en aval du réservoir d'eau (12) et en amont du dispositif de chauffage (14), et **en ce qu'**un dispositif (24) de retenue de particules issues du dispositif de chauffage (14) est disposé entre le dispositif de chauffage (14) et la soupape de surpression (22).

2. Machine à café à dosettes (10) selon la revendication 1, **caractérisée en ce qu'**une pompe (26) est disposée dans la conduite d'eau (18).

3. Machine à café à dosettes (10) selon la revendication 1 ou 2, **caractérisée en ce que** la pompe (26) est disposée entre le réservoir d'eau (12) et la soupape de surpression (22).

4. Machine à café à dosettes (10) selon l'une des revendications précédentes, **caractérisée en ce que** le dispositif (24) est disposé de manière voûtée ou inclinée par rapport à la direction d'écoulement de l'eau.

5. Machine à café à dosettes (10) selon l'une des revendications précédentes, **caractérisée en ce que** le dispositif (24) présente, sur son côté aval, des orifices dont les bords sont coniques ou arrondis.
